# EUROPÄISCHE PATENTSCHRIFT

(11) **EP 2 883 677 B1**
(45) Veröffentlichungstag und Bekanntmachung des Hinweises auf die Patenterteilung: **03.05.2017**
(21) Anmeldenummer: 14187518.7
(22) Anmeldetag: 02.10.2014
(51) Int. Cl.: B29C 45/52

(54) **Rückstromsperre für eine Spritzgießmaschine**
Non-return valve for an injection moulding machine
Clapet anti-retour pour une machine de moulage par injection

(30) Priorität: 16.12.2013 DE 102013114125
(43) Veröffentlichungstag der Anmeldung: 17.06.2015
(73) Patentinhaber: Groche Technik GmbH, 32689 Kalletal (DE)
(72) Erfinder: Groche, Armin, 32689 Kalletal (DE)
(74) Vertreter: Hafner & Kohl

(56) Entgegenhaltungen:
- GB-A- 2 219 236
- JP-A- H0 716 892
- US-A- 5 164 207

## Beschreibung

Die Erfindung betrifft eine Rückstromsperre für eine Spritzgießmaschine, umfassend einen Grundkörper, in welchem wenigstens ein zwischen wenigstens einer grundkörperseitigen Schmelzekanaleintrittsöffnung und wenigstens einer grundkörperseitigen Schmelzekanalaustrittsöffnung verlaufender Schmelzekanal ausgebildet ist.

Derartige Rückstromsperren sind an und für sich bekannt, beispielsweise aus der US 5 164 207 oder der GB 2 219 236. Aufgabe und Funktion entsprechender Rückstromsperren bestehen im Allgemeinen darin, in ihrem in eine Spritzgießmaschine, typischerweise im Bereich einer Plastifiziereinheit zur Plastifizierung eines zu plastifizierenden Materials, verbauten Zustand ein Rückströmen von plastifiziertem Material von einem Schneckenvorraum, in welchem sich das plastifizierte Material vor dem Einspritzen in eine Kavität eines Spritzgießwerkzeugs befindet, in hintere Bereiche des Schneckenzylinders zu unterbinden.

Konstruktiv umfassen entsprechende Rückstromsperren typischerweise einen von wenigstens einem Schmelzekanal durchsetzten Grundkörper. Ein Rückströmen von plastifiziertem Material kann prinzipiell dadurch verhindert werden, dass ein Schließkörper derart relativ zu dem Grundkörper bewegt wird, dass dieser eine entsprechende grundkörperseitige Schmelzekanalaustrittsöffnung verschließt. Wenngleich aus dem Stand der Technik, insbesondere im Hinblick auf deren Dichtigkeit, technisch ausgereifte Prinzipien entsprechender Rückstromsperren bekannt sind, besteht weiterhin ein Bedarf an einer technisch zuverlässigen wie auch konstruktiv einfach aufgebauten Rückstromsperre.

Der Erfindung liegt daher die Aufgabe zugrunde, eine technisch zuverlässige sowie konstruktiv einfach aufgebaute Rückstromsperre anzugeben.

Die Aufgabe wird durch eine Rückstromsperre der eingangs genannten Art gelöst, welche sich erfindungsgemäß durch einen relativ zu dem Grundkörper bewegbar gelagerten Schließkörper, welcher in einer Öffnungsstellung derart von der diesem zugewandten Schmelzekanalaustrittsöffnung weg bewegt ist, dass ein Austritt einer plastifizierten Schmelze aus der Schmelzekanalaustrittsöffnung möglich ist, und in einer Schließstellung derart vor die diesem zugewandte Schmelzekanalaustrittsöffnung bewegt ist, dass ein Austritt einer plastifizierten Schmelze aus der Schmelzekanalaustrittsöffnung nicht möglich ist, sowie eine dem Schließkörper zugeordnete Stelleinrichtung, über welche eine auf den Schließkörper wirkende Stellkraft derart ausübbar oder ausgeübt ist, dass der Schließkörper in die Schließstellung bewegt wird, auszeichnet.

Die erfindungsgemäße Rückstromsperre umfasst als im Hinblick auf deren Funktionsprinzip wesentliche Komponenten einen Grundkörper, einen relativ zu dem Grundkörper bewegbar gelagerten, typischerweise mit dem Grundkörper gekoppelten, Schließkörper und eine dem Schließkörper zugeordnete Stelleinrichtung. Die erfindungsgemäße Rückstromsperre kann auch als Rückstromventil bezeichnet bzw. erachtet werden.

Der Grundkörper der Rückstromsperre ist derart bemessen, dass er in einen Schneckenzylinder einer mit der erfindungsgemäßen Rückstromsperre ausgestatteten Spritzgießmaschine einsetzbar ist. In dem Grundkörper ist wenigstens ein Schmelzekanal, d. h. eine den Grundkörper vollständig durchsetzende Bohrung oder Öffnung, durch welche eine plastifizierte Schmelze strömen kann, ausgebildet. Der Schmelzekanal verläuft zwischen einer Schmelzekanaleintrittsöffnung, über welche eine plastifizierte Schmelze in den Grundkörper eintreten kann, und einer Schmelzekanalaustrittsöffnung, über welche eine in den Grundkörper eingetretene plastifizierte Schmelze aus dem Grundkörper austreten kann. Die Schmelzekanaleintrittsöffnung und die Schmelzekanalaustrittsöffnung befinden sich typischerweise an entgegen gesetzten Enden des Grundkörpers.

Der Schließkörper der Rückstromsperre ist relativ zu dem Grundkörper bewegbar gelagert. Der Schließkörper kann dabei insbesondere in bzw. zwischen zwei Stellungen, nämlich eine(r) Öffnungsstellung, in welcher der Schließkörper derart von der diesem zugewandten Schmelzekanalaustrittsöffnung weg bewegt ist, dass ein Austritt einer plastifizierten Schmelze aus der Schmelzekanalaustrittsöffnung möglich ist, und eine(r) Schließstellung, in welcher der Schließkörper derart vor die diesem zugewandte Schmelzekanalaustrittsöffnung bewegt ist, dass ein Austritt einer plastifizierten Schmelze aus der Schmelzekanalaustrittsöffnung nicht möglich ist, bewegt werden. Die Öffnungsstellung des Schließkörpers entspricht gleichermaßen der Öffnungsstellung der Rückstromsperre, die Schließstellung des Schließkörpers entspricht gleichermaßen der Schließstellung der Rückstromsperre.

Im in einer Spritzgießmaschine verbauten Zustand der Rückstromsperre ist der Grundkörper typischerweise lagefest, d. h. unbewegbar, innerhalb des Schneckenzylinders der Spritzgießmaschine gelagert, der Schließkörper ist relativ zu dem Grundkörper bewegbar gelagert. Die Aufgabe bzw. Funktion der Rückstromsperre wird also insbesondere dadurch erfüllt, dass in der Öffnungsstellung des Schließkörpers ein Strömen von plastifizierter Schmelze durch den Grundkörper, d. h. von einem bezogen auf eine Einspritzeinheit der Spritzgießmaschine hinteren Bereich des Schneckenzylinders in einen Schneckenvorraum, möglich ist, wohingegen in der Schließstellung des Schließkörpers ein Rückströmen von in dem Schneckenvorraum befindlicher plastifizierter Schmelze zumindest weitgehend verhindert ist.

Die Rückstromsperre umfasst eine dem Schließkörper zugeordnete Stelleinrichtung, über welche eine auf den Schließkörper wirkende Stellkraft derart ausübbar oder ausgeübt ist, dass der Schließkörper in die Schließstellung bewegt wird. Die Stelleinrichtung ist also dazu eingerichtet, eine auf den Schließkörper wirkende Stellkraft derart auszuüben, dass der Schließkörper in die Schließstellung bewegt wird. Bedingt durch die über die Stelleinrichtung auf den Schließkörper ausgeübte Stellkraft, wird der Schließkörper also, sofern keine die Stellkraft kompensierende Kraft auf diesen ausgeübt wird, in die Schließstellung bewegt bzw. in dieser gehalten oder gesichert. Über eine die Stellkraft kompensierende Kraft ist es sonach möglich, die Wirkung der durch die über die Stelleinrichtung auf den Schließkörper ausgeübten Stellkraft aufzuheben und den Schließkörper aus der Schließstellung zu lösen, d. h. insbesondere in von der Schließstellung in die Öffnungsstellung zu überführen.

Wie sich im Weiteren noch ergibt, ist eine die Stellkraft kompensierende Kraft typischerweise eine im Rahmen eines Spritzgießvorgangs, d. h. insbesondere Einspritzvorgangs, durch eine durch den Grundkörper strömende plastifizierte Schmelze auf den Schließkörper ausgeübte Kraft. Die durch eine durch den Grundkörper strömende plastifizierte Schmelze auf den Schließkörper ausgeübte Kraft ist dabei insbesondere abhängig von dem Druck, d. h. insbesondere dem Einspritzdruck, mit welchem die plastifizierte Masse im Rahmen des Spritzgießvorgangs, d. h. insbesondere des Einspritzvorgangs, durch den Grundkörper strömt.

Hieraus lässt sich folgern, dass die Kraftrichtung der über die Stelleinrichtung ausgeübten Stellkraft typischerweise entgegen gesetzt der Kraftrichtung einer Kraft, welche im in einer Spritzgießmaschine verbauten Zustand der Rückstromsperre durch eine durch den grundkörperseitigen Schmelzekanal strömende plastifizierte Schmelze auf Schließkörper ausgeübt wird, ist.

Hieraus lässt sich ebenso folgern, dass die über die Stelleinrichtung ausgeübte Kraft zweckmäßig derart gewählt ist, dass sie kleiner als eine auf den Schließkörper wirkende Kraft einer im Rahmen eines Spritzgießvorgangs einer Spritzgießmaschine, in welcher die Rückstromsperre verbaut ist, durch den grundkörperseitigen Schmelzekanal strömenden plastifizierten Schmelze ist.

In einer bevorzugten Ausführungsform der erfindungsgemäßen Rückstromsperre umfasst die Stelleinrichtung wenigstens eine innerhalb des Grundkörpers angeordnete, mit dem Schließkörper gekoppelte Druckfeder, über welche die auf den Schließkörper wirkende Stellkraft ausgeübt ist bzw. wird. Bevorzugt ist also wenigstens eine mit dem Schließkörper gekoppelte Druckfeder vorgesehen, welche wenigstens eine Druckfeder innerhalb des Grundkörpers derart angeordnet bzw. ausgerichtet ist, dass die über diese ausgeübte Federkraft bedingt durch ihre Kopplung mit dem Schließkörper derart auf den Schließkörper wirkt, dass dieser in die Schließstellung bewegt bzw. in der Schließstellung gehalten wird. Die Kopplung zwischen der Druckfeder und dem Schließkörper ist typischerweise mittelbar, d. h. unter Zwischenschaltung wenigstens eines weiteren Bauteils, realisiert.

Dementsprechend kann es in Weiterbildung dieser bevorzugten Ausführungsform der erfindungsgemäßen Rückstromsperre vorgesehen sein, dass die Stelleinrichtung einen den Schließkörper mit dem Grundkörper koppelnden, relativ zu dem Grundkörper bewegbar gelagerten Bolzen umfasst, wobei die Druckfeder auf einem innerhalb des Grundkörpers befindlichen Bolzenabschnitt des Bolzens angeordnet ist. Der der Stelleinrichtung zugehörige Bolzen dient also einerseits dazu, den Schließkörper mit dem Grundkörper zu koppeln, d. h. eine physikalischmechanische Verbindung zwischen dem Schließkörper und dem Grundkörper herzustellen. Der der Stelleinrichtung zugehörige Bolzen dient über einen innerhalb des Grundkörpers befindlichen Bolzenabschnitt andererseits dazu, die der Stelleinrichtung ebenso zugehörige Druckfeder innerhalb des Grundkörpers zu lagern. Hieraus ergibt sich, dass über den Bolzen auch die vorstehend beschriebene mittelbare Kopplung zwischen der Druckfeder und dem Schließkörper realisiert sein kann.

Der Bolzen ragt typischerweise zumindest mit seinem dem Schließkörper abgewandten Ende abschnittsweise in eine grundkörperseitige Bohrung, insbesondere eine Sack- oder Durchgangsbohrung. Der Grundkörper ist sonach, insbesondere zur Aufnahme bzw. Lagerung des Bolzens, mit einer Bohrung versehen, in welche der Bolzen derart ragt, dass ein erster oder innerer Bolzenabschnitt innerhalb des Grundkörpers befindlich und ein zweiter oder äußerer Bolzenabschnitt außerhalb des Grundkörpers befindlich ist. Über den ersten oder inneren Bolzenabschnitt erfolgt die Lagerung der Druckfeder, über den zweiten oder äußeren Bolzenabschnitt erfolgt die Kopplung mit dem Schließkörper, d. h. der Schließkörper ist mit dem zweiten oder äußeren Bolzenabschnitt gekoppelt respektive an diesem angeordnet.

Der Bolzen kann im Bereich seines dem Schließkörper abgewandten Endes mit einer ersten Anschlagfläche versehen sein, mit welcher ersten Anschlagfläche er in der Schließstellung an einem grundkörperseitigen ersten Gegenanschlag anliegt. Durch die Ausbildung bzw. das Zusammenwirken entsprechender erster Anschlag- und Gegenanschlagflächen ist eine eindeutige Definition der Schließstellung realisierbar; diese liegt also vor, wenn die bolzenseitige erste Anschlagfläche an dem grundkörperseitigen ersten Gegenanschlag anliegt. Selbstverständlich kann im Hinblick auf fertigungsbedingte Toleranzen zwischen der bolzenseitigen ersten Anschlagfläche und dem grundkörperseitigen Gegenanschlag in der Schließstellung der Rückstromsperre auch ein gewisses Spiel gegeben sein.

Der grundkörperseitige erste Gegenanschlag kann, sofern es sich bei der in dem Grundkörper vorgesehenen Bohrung um eine Sackbohrung handelt, beispielsweise durch eine Wand des Grundkörpers gebildet sein. Sofern es sich bei der in dem Grundkörper vorgesehenen Bohrung um eine Durchgangsbohrung handelt, kann der grundkörperseitige erste Gegenanschlag durch ein in den Grundkörper ragendes freies Ende eines mit dem Grundkörper verbundenen, insbesondere verschraubten, Gegenanschlagbolzens gebildet sein.

Der Bolzen kann im Bereich seines dem Schließkörper abgewandten Endes mit einer zweiten Anschlagfläche versehen sein, mit welcher zweiten Anschlagfläche er in der Öffnungsstellung an einem grundkörperseitigen zweiten Gegenanschlag anliegt. Durch die Ausbildung bzw. das Zusammenwirken entsprechender zweiter Anschlag- und Gegenanschlagflächen ist sonach eine eindeutige Definition der Öffnungsstellung realisierbar; diese liegt also vor, wenn die bolzenseitige zweite Anschlagfläche an dem grundkörperseitigen zweiten Gegenanschlag anliegt.

Der grundkörperseitige zweite Gegenanschlag kann beispielsweise durch eine in der grundkörperseitigen Bohrung gebildete radiale Stufe, d. h. im Bereich einer Änderung des Bohrungsdurchmessers, gebildet sein.

Die Erfindung betrifft ferner eine Spritzgießmaschine, insbesondere zum Spritzgießen von thermoplastischen Kunststoffmaterialien, aufweisend wenigstens eine wie vorstehend beschriebene erfindungsgemäße Rückstromsperre.

Mithin gelten sämtliche obigen Ausführungen im Zusammenhang mit der erfindungsgemäßen Rückstromsperre analog für die erfindungsgemäße Spritzgießmaschine.

Es soll im Zusammenhang mit der erfindungsgemäßen Spritzgießmaschine nochmals gesondert erwähnt werden, dass die über die Stelleinrichtung auf den Schließkörper ausgeübte Stellkraft zweckmäßig derart gewählt ist, dass sie kleiner als eine auf den Schließkörper wirkende Kraft einer im Rahmen eines Spritzgießvorgangs der Spritzgießmaschine durch den wenigstens einen grundkörperseitigen Schmelzekanal strömenden plastifizierten Schmelze ist. Über die auf den Schließkörper im Rahmen eines Spritzgießvorgangs der Spritzgießmaschine durch die durch den grundkörperseitigen Schmelzekanal strömende plastifizierte Schmelze wirkende Kraft ist die über die Stelleinrichtung ausgeübte Stellkraft sonach kompensierbar.

Entsprechend erfolgt bei einem Strömen einer plastifizierten Schmelze durch den grundkörperseitigen Schmelzekanal im Rahmen eines Spritzgießvorgangs bzw. Einspritzvorgangs eine automatische Überführung des Schließkörpers von der Schließstellung in die Öffnungsstellung und somit ein Öffnen der Rückstromsperre. Sobald der Druck der durch den grundkörperseitigen Schmelzekanal strömenden plastifizierten Schmelze und somit die über diese auf den Schließkörper ausgeübte Kraft derart nachlässt, dass die über die Stelleinrichtung auf den Schließkörper ausgeübte Stellkraft überwiegt, wird der Schließkörper wieder von der Öffnungsstellung in die Schließstellung überführt, was ein Schließen der Rückstromsperre bedingt.

Weitere Vorteile, Merkmale und Einzelheiten der Erfindung ergeben sich aus dem im Folgenden beschriebenen Ausführungsbeispiel sowie anhand der Zeichnungen. Dabei zeigen:

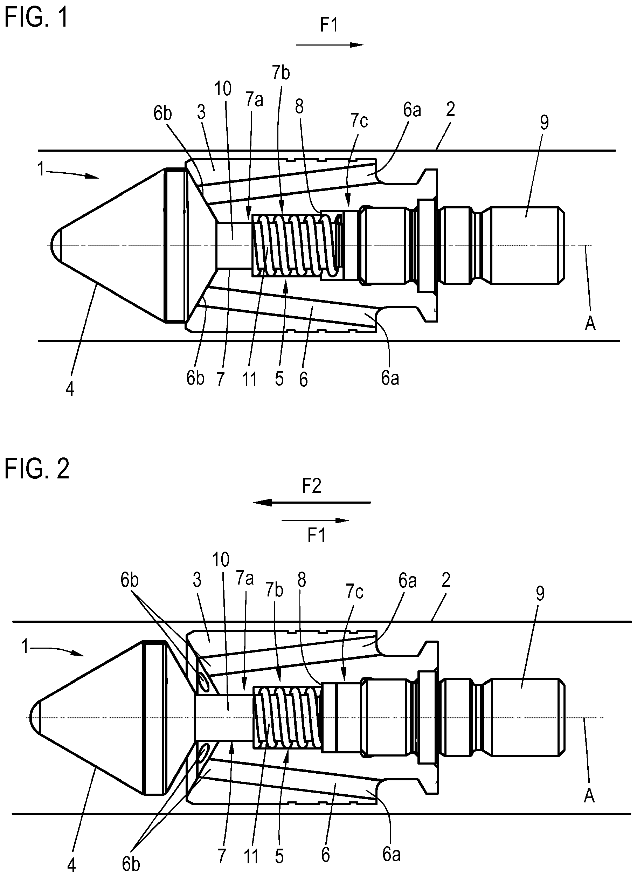

- Fig. 1, 2: jeweils eine Prinzipdarstellung einer Rückstromsperre gemäß einem Ausführungsbeispiel der Erfindung.

Die Fig. 1, 2 zeigen jeweils eine Prinzipdarstellung einer Rückstromsperre 1 gemäß einem Ausführungsbeispiel der Erfindung. Die Rückstromsperre 1 befindet sich in einem in einer durch entsprechende Wandungen 2 eines Schneckenzylinders angedeuteten Spritzgießmaschine zum Spritzgießen thermoplastischer Kunststoffmaterialien verbauten Zustand.

Die in Fig. 1 gezeigte Darstellung entspricht der Schließstellung der Rückstromsperre 1, die in Fig. 2 gezeigte Darstellung entspricht der Öffnungsstellung der Rückstromsperre 1.

Die Rückstromsperre 1 umfasst als wesentliche Komponenten einen rotationssymmetrischen, im Wesentlichen zylindrischen Grundkörper 3, einen relativ zu dem Grundkörper 3 bewegbar gelagerten doppelkegelförmigen Schließkörper 4 und eine dem Schließkörper 4 zugeordnete Stelleinrichtung 5.

Der Grundkörper 3 ist mit mehreren, diesen jeweils durchsetzenden Schmelzekanälen 6 versehen. Die Schmelzekanäle 6 erstrecken sich jeweils zwischen jeweiligen in den in den Fig. rechten Bereich des Grundkörpers 3 gebildeten Schmelzekanaleintrittsöffnungen 6a und in den in den Fig. im linken Bereich des Grundkörpers 3 gebildeten Schmelzekanalaustrittsöffnungen 6b.

Der Grundkörper 3 ist zudem mittig, d. h. im Bereich der Symmetrieachse A, mit einer axialen Durchgangsbohrung 7 versehen. Die Durchgangsbohrung 7 weist Bereiche 7a, 7b, 7c unterschiedlicher Durchmesser auf. Der Durchmesser des Bereichs 7a ist kleiner als der Durchmesser des diesem axial folgenden Bereichs 7b, der Durchmesser des Bereichs 7b ist kleiner als der Durchmesser des diesem axial folgenden Bereichs 7c. Zwischen dem Bereich 7b des mittleren Durchmessers und dem Bereich 7c des größten Durchmessers ist eine Stufe 8 gebildet.

In den Bereich 7c der Durchgangsbohrung 7 ist ein Gegenanschlagbolzen 9 eingeschraubt, dessen in den Grundkörper 3, d. h. in die grundkörperseitige Durchgangsbohrung 7, ragendes freies Ende die in den Fig. rechte Seite der Durchgangsbohrung 7 verschließt.

In die Bereiche 7a, 7b der Durchgangsbohrung 7 ragt ein der Stelleinrichtung 5 zugehöriger Bolzen 10. Der Bolzen 10 ist in der Durchgangsbohrung 7 des Grundkörpers 3 relativ zu dem Grundkörper 3 axial bewegbar, d. h. axial verschiebbar, geführt.

Der Bolzen 10 ist im Bereich seines außerhalb des Grundkörpers 3 liegenden freien Endes mit dem Schließkörper 4, z. B. durch eine Schraubverbindung, verbunden. Der Bolzen 10 koppelt sonach den Schließkörper 4 mit dem Grundkörper 3. In dem Bereich seines innerhalb des Grundkörpers 3 liegenden freien Endes ist auf dem Bolzen 10 eine der Stelleinrichtung 5 ebenso zugehörige Druckfeder 11 angeordnet. Das unmittelbare freie Ende des innerhalb des Grundkörpers 3 liegenden Bolzens 10 ist entsprechend dem Bereich 7c des größten Durchmessers der grundkörperseitigen Durchgangsbohrung 7 radial aufgeweitet, so dass sich hier eine Art Kolben-Zylinder-Führung ergibt.

Im Weiteren wird das Funktionsprinzip der Rückstromsperre 1, d. h. insbesondere das Funktionsprinzip der dieser zugehörigen Stelleinrichtung 5, näher erläutert.

Wie durch den Pfeil F1 angedeutet, ist bzw. wird über die Stelleinrichtung 5 eine auf den Schließkörper 4 wirkende Stellkraft F1 derart ausgeübt, dass der Schließkörper 4 in die Schließstellung bewegt ist bzw. wird (vgl. Fig. 1). Die Stellkraft F1 entspricht im Wesentlichen der Federkraft der Druckfeder 11 bzw. ist durch diese umgesetzt. Dies ergibt sich durch die besondere Anordnung der Druckfeder 11 auf dem mit dem Schließkörper 4 verbundenen Bolzen 10, welche es erlaubt, dass die Federkraft der Druckfeder 11 derart auf den Schließkörper 4 wirkt, dass dieser, sofern keine die Federkraft kompensierenden weiteren Kräfte auf den Schließkörper 4 ausgeübt werden, in die Schließstellung bewegt bzw. in der Schließstellung gehalten ist bzw. wird.

Wie erwähnt, zeigt Fig. 1 die Schließstellung der Rückstromsperre 1. In der Schließstellung der Rückstromsperre 1 ist der Schließkörper 4 sonach derart vor die diesem zugewandten Schmelzekanalaustrittsöffnungen 6b bewegt, dass ein Austritt einer durch den grundkörperseitigen Schmelzekanal 6 strömenden plastifizierten Schmelze aus den Schmelzekanalaustrittsöffnungen 6b und daher ein Strömen der plastifizierten Schmelze in den Schneckenvorraum der Spritzgießmaschine nicht möglich ist.

Anhand von Fig. 1 ist ferner ersichtlich, dass der Bolzen 10 in der Schließstellung der Rückstromsperre 1 mit seinem eine bolzenseitige erste Anschlagfläche bildenden, dem Gegenanschlagbolzen 9 unmittelbar zugewandten freien Ende an einem grundkörperseitigen ersten Gegenanschlag anliegt. Der grundkörperseitige erste Gegenanschlag ist dabei durch das in den Grundkörper 3 ragende freie Ende des Gegenanschlagbolzens 9 gebildet. Selbstverständlich kann im Hinblick auf fertigungsbedingte Toleranzen zwischen der bolzenseitigen ersten Anschlagfläche und dem in den Grundkörper 3 ragenden freien Ende des Gegenanschlagbolzens 9 in der Schließstellung der Rückstromsperre 1 auch ein gewisses Spiel gegeben sein.

In der in Fig. 2 gezeigten Öffnungsstellung der Rückstromsperre 1 ist der Schließkörper 4 derart von den diesem zugewandten Schmelzekanalaustrittsöffnungen 6b weg bewegt, dass ein Austritt einer plastifizierten Schmelze aus den Schmelzekanalaustrittsöffnungen 6b und daher ein Strömen der plastifizierten Schmelze in den Schneckenvorraum der Spritzgießmaschine möglich ist.

Anhand von Fig. 2 ist ferner ersichtlich, dass der Bolzen 10 in der Öffnungsstellung der Rückstromsperre 1 mit einer im Bereich des freien Endes gebildeten zweiten Anschlagfläche an einem grundkörperseitigen zweiten Gegenanschlag anliegt. Der grundkörperseitige zweite Gegenanschlag ist dabei durch die zwischen den Bereichen 7b, 7c der grundkörperseitigen Durchgangsbohrung 7gebildete Stufe 8 gebildet.

Die axiale Bewegung des Schließkörpers 4, wie auch die axiale Bewegung des mit diesem gekoppelten Bolzens 10, zwischen der in Fig. 1 gezeigten Schließstellung und der in Fig. 2 gezeigten Öffnungsstellung der Rückstromsperre 1 resultiert daraus, dass die im Rahmen eines Spritzgießvorgangs, d. h. insbesondere eines Einspritzvorgangs, mit hohem Druck durch den grundkörperseitigen Schmelzekanal 6 strömende plastifizierte Schmelze eine der Stellkraft F1 entgegen gerichtete Kraft F2 auf den Schließkörper 4 ausübt. Die Kraftrichtung der über die Stelleinrichtung 5 auf den Schließkörper 4 ausgeübten Stellkraft F1 ist sonach entgegen gesetzt der Kraftrichtung der Kraft F2, welche durch die durch den grundkörperseitigen Schmelzekanal 6 strömende plastifizierte Schmelze auf den Schließkörper 4 ausgeübt wird.

Um die durch die Stelleinrichtung 5 auf den Schließkörper 4 ausgeübte Stellkraft F1 zu kompensieren, ist die über die Stelleinrichtung 5 auf den Schließkörper 4 ausgeübte Stellkraft F1, d. h. die Federkraft der Druckfeder 11, derart gewählt, dass sie kleiner als eine auf den Schließkörper 4 wirkende Kraft F2 der im Rahmen eines Spritzgießvorgangs der Spritzgießmaschine durch den grundkörperseitigen Schmelzekanal 6 strömenden plastifizierten Schmelze ist.

Entsprechend erfolgt bei einem Strömen einer plastifizierten Schmelze im Rahmen eines Spritzgießvorgangs durch den Grundkörper 3 eine automatische Überführung des Schließkörpers 4 von der in Fig. 1 gezeigten Schließstellung in die in Fig. 2 gezeigte Öffnungsstellung der Rückstromsperre 1 und somit ein automatisches Öffnen der Rückstromsperre 1. Sobald der Druck der durch den Grundkörper 3 strömenden plastifizierten Schmelze und somit die über diese auf den Schließkörper 4 ausgeübte Kraft F2 derart nachlässt, dass die über die Stelleinrichtung 5 auf den Schließkörper 4 ausgeübte Stellkraft F1 überwiegt, wird der Schließkörper 4 von der in Fig. 2 gezeigten Öffnungsstellung in die in Fig. 1 gezeigte Schließstellung der Rückstromsperre 1 überführt, was ein Schließen der Rückstromsperre 1 bedingt.

## Patentansprüche

1. Rückstromsperre (1) für eine Spritzgießmaschine, umfassend:
- einen Grundkörper (3), in welchem wenigstens ein zwischen wenigstens einer grundkörperseitigen Schmelzekanaleintrittsöffnung (6a) und wenigstens einer grundkörperseitigen Schmelzekanalaustrittsöffnung (6b) verlaufender Schmelzekanal (6) ausgebildet ist, umfassend
- einen relativ zu dem Grundkörper (3) bewegbar gelagerten Schließkörper (4), welcher in einer Öffnungsstellung derart von der diesem zugewandten Schmelzekanalaustrittsöffnung (6b) weg bewegt ist, dass ein Austritt einer plastifizierten Schmelze aus der Schmelzekanalaustrittsöffnung (6b) möglich ist, und in einer Schließstellung derart vor die diesem zugewandte Schmelzekanalaustrittsöffnung (6b) bewegt ist, dass ein Austritt einer plastifizierten Schmelze aus der Schmelzekanalaustrittsöffnung (6b) nicht möglich ist, sowie
- eine dem Schließkörper (4) zugeordnete Stelleinrichtung (5), über welche eine auf den Schließkörper (4) wirkende Stellkraft (F1) derart ausübbar oder ausgeübt ist, dass der Schließkörper (4) in die Schließstellung bewegt wird, wobei
- die Stelleinrichtung (5) wenigstens eine innerhalb des Grundkörpers (3) angeordnete, mit dem Schließkörper (4) gekoppelte Druckfeder (11) umfasst, über welche die auf den Schließkörper (4) wirkende Stellkraft (F1) ausgeübt ist, wobei
- die Stelleinrichtung (5) einen den Schließkörper (4) mit dem Grundkörper (3) koppelnden, relativ zu dem Grundkörper (3) bewegbar gelagerten Bolzen (10) umfasst, wobei die Druckfeder (11) auf einem innerhalb des Grundkörpers (3) befindlichen Bolzenabschnitt des Bolzens (10) angeordnet ist,
**dadurch gekennzeichnet, dass**
der Bolzen (10) im Bereich seines dem Schließkörper (4) abgewandten Endes mit einer Anschlagfläche versehen ist, mit welcher Anschlagfläche er in der Schließstellung an einem grundkörperseitigen ersten Gegenanschlag anliegt, und/oder
dass der Bolzen (10) im Bereich seines dem Schließkörper (4) abgewandten Endes mit einer Anschlagfläche versehen ist, mit welcher Anschlagfläche er in der Öffnungsstellung an einem grundkörperseitigen zweiten Gegenanschlag anliegt.

2. Rückstromsperre nach Anspruch 1, **dadurch gekennzeichnet, dass** die Kraftrichtung der über die Stelleinrichtung (5) ausgeübten Stellkraft (F1) entgegen gesetzt der Kraftrichtung einer Kraft, welche im in einer Spritzgießmaschine verbauten Zustand der Rückstromsperre (1) durch eine durch den grundkörperseitigen Schmelzekanal (6) strömende plastifizierte Schmelze auf den Schließkörper (4) ausgeübt wird, ist.

3. Rückstromsperre nach Anspruch 1 oder 2, **dadurch gekennzeichnet, dass** die über die Stelleinrichtung (5) ausgeübte Stellkraft (F1) derart gewählt ist, dass sie kleiner als eine auf den Schließkörper (4) wirkende Kraft (F2) einer im Rahmen eines Spritzgießvorgangs einer Spritzgießmaschine, in welcher die Rückstromsperre (1) verbaut ist, durch den grundkörperseitigen Schmelzekanal (6) strömenden plastifizierten Schmelze ist.

4. Rückstromsperre nach einem der vorangehenden Ansprüche, **dadurch gekennzeichnet, dass** der Bolzen (10) zumindest mit seinem dem Schließkörper (4) abgewandten Ende abschnittsweise in eine grundkörperseitige Bohrung, insbesondere eine Sack- oder Durchgangsbohrung (7), ragt.

5. Rückstromsperre nach einem der vorangehenden Ansprüche, **dadurch gekennzeichnet, dass** der grundkörperseitige erste Gegenanschlag durch ein in den Grundkörper (3) ragendes freies Ende eines mit dem Grundkörper (3) verbundenen Gegenanschlagbolzens (9) gebildet ist.

6. Rückstromsperre nach Anspruch 4, **dadurch gekennzeichnet, dass** der grundkörperseitige zweite Gegenanschlag durch eine in der Bohrung gebildete radiale Stufe (8) gebildet ist.

7. Spritzgießmaschine, insbesondere zum Spritzgießen von thermoplastischen Kunststoffmaterialien, aufweisend wenigstens eine Rückstromsperre (1) nach einem der vorangehenden Ansprüche.

8. Spritzgießmaschine nach Anspruch 7, **dadurch gekennzeichnet, dass** die über die Stelleinrichtung (5) ausgeübte Stellkraft (F1) derart gewählt ist, dass sie kleiner als eine auf den Schließkörper (4) wirkende Kraft einer im Rahmen eines Spritzgießvorgangs der Spritzgießmaschine durch den grundkörperseitigen Schmelzekanal (6) strömenden plastifizierten Schmelze ist.

## Claims

1. Non-return valve (1) for an injection moulding machine, comprising:
- a main body (3) in which at least one melt duct (6) that runs between at least one melt duct entry opening (6a) of the main body and at least one melt duct exit opening (6b) of the main body is configured, comprising
- a closing body (4) that is mounted so as to be movable relative to the main body (3) and in an open position is moved away from the melt duct exit opening (6b) that faces said closing body (4) in such a manner that an exit of a plasticized melt from the melt duct exit opening (6b) is possible, and in a shut position is moved in front of the melt duct exit opening (6b) that faces said closing body (4) in such a manner that an exit of a plasticized melt from the melt duct exit opening (6b) is impossible, and
- an actuator installation (5) that is assigned to the closing body (4) and by way of which an actuating force (F1) acting on the closing body (4) is capable of being exerted or is exerted in such a manner that the closing body (4) is moved to the shut position, wherein
- the actuator installation (5) comprises at least one compression spring (11) that is disposed within the main body (3) and is coupled to the closing body (4), by way of which compression spring (11) the actuating force (F1) acting on the closing body (4) is exerted, wherein
- the actuation installation (5) comprises a bolt (10) that couples the closing body (4) to the main body (3) and is mounted so as to be movable relative to the main body (3), wherein the compression spring (11) is disposed on a bolt portion of the bolt (10) that is located within the main body (3),
**characterized in that**
the bolt (10) in the region of that end thereof that faces away from the closing body (4) is provided with a detent face by way of which detent face said bolt (10) in the shut position bears on a first counter-detent of the main body, and/or
**in that** the bolt (10) in the region of that end thereof that faces away from the closing body (4) is provided with a detent face by way of which detent face said bolt (10) in the open position bears on a second counter-detent of the main body.

2. Non-return valve according to Claim 1, **characterized in that** the direction of force of the actuating force (F1) that is exerted by way of the actuation installation (5) is opposed to the direction of force of a force which in the installed state of the non-return valve (1) in an injection moulding machine is exerted on the closing body (4) by a plasticized melt flowing through the melt duct (6) of the main body.

3. Non-return valve according to Claim 1 or 2, **characterized in that** the actuating force (F1) that is exerted by way of the actuation installation (5) is chosen in such a manner that said actuating force (F1) is smaller than a force (F2) of a plasticized melt that, in the context of an injection moulding procedure of an injection moulding machine in which the non-return valve (1) is installed, flows through the melt duct (6) of the main body and acts on the closing body (4).

4. Non-return valve according to one of the preceding claims, **characterized in that** the bolt (10) at least by way of that end thereof that faces away from the closing body (4) in portions protrudes into a bore of the main body, in particular a blind bore or a through bore (7).

5. Non-return valve according to one of the preceding claims, **characterized in that** the first counter-detent of the main body is formed by a free end, protruding into the main body (3), of a counter-detent bolt (9) which is connected to the main body (3).

6. Non-return valve according to Claim 4, **characterized in that** the second counter-detent of the main body is formed by a radial shoulder (8) that is formed in the bore.

7. Injection moulding machine, in particular for injection moulding thermoplastic plastics, having at least one non-return valve (1) according to one of the preceding claims.

8. Injection moulding machine according to Claim 7, **characterized in that** the actuating force (F1) that is exerted by way of the actuation installation (5) is chosen in such a manner that said actuating force (F1) is smaller than a force of a plasticized melt that, in the context of an injection moulding procedure of the injection moulding machine, flows through the melt duct (6) of the main body and acts on the closing body (4).

## Revendications

1. Clapet anti-retour (1) pour machine de moulage par injection, comprenant :
un corps de base (3) dans lequel un canal (6) à matière fondue s'étend entre au moins une ouverture d'entrée (6a) formée côté corps de base pour le canal à matière fondue et au moins une ouverture de sortie (6b) formée côté corps de base pour le canal à matière fondue, et comprenant
un corps de fermeture (4) monté à déplacement par rapport au corps de base (3), le corps de fermeture étant éloigné de l'ouverture de sortie (6b), tournée vers ce corps de base, du canal à matière fondue lorsqu'il est dans une position d'ouverture, de manière à permettre la sortie de matière fondue plastifiée hors de l'ouverture de sortie (6b) du canal à matière fondue et, dans une position de fermeture, étant déplacé devant l'ouverture de sortie (6b), tournée vers ce corps de base, du canal à matière fondue, de manière à ne plus permettre la sortie de matière fondue plastifiée hors de l'ouverture de sortie (6b) du canal à matière fondue,
un dispositif d'ajustement (5) associé au corps de fermeture (4) et par lequel une force d'ajustement (F1) agissant sur le corps de fermeture (4) peut être exercée ou est exercée de manière à déplacer le corps de fermeture (4) dans la position de fermeture,
le dispositif d'ajustement (5) comportant au moins un ressort de poussée (11) disposé à l'intérieur du corps de base (3), accouplé au corps de fermeture (4) et par lequel la force d'ajustement (F1) agissant sur le corps de fermeture (4) est exercée,
le dispositif d'ajustement (5) comportant un goujon (10) accouplant le corps de fermeture (4) au corps de base (3) et monté à déplacement par rapport au corps de base (3), le ressort de poussée (11) étant disposé sur une partie du goujon (10) située à l'intérieur du corps de base (3),
**caractérisé en ce que**
au niveau de son extrémité non tournée vers le corps de fermeture (4), le goujon (10) est doté d'une surface de butée par laquelle il repose sur une première butée complémentaire située côté corps de base lorsqu'il est en position de fermeture et/ou
**en ce qu'**au niveau de son extrémité non tournée vers le corps de fermeture (4), le goujon (10) est doté d'une surface de butée par laquelle il repose sur une deuxième butée complémentaire située côté corps de base lorsqu'il se trouve dans sa position d'ouverture.

2. Clapet anti-retour selon la revendication 1, **caractérisé en ce que** la direction de la force d'ajustement (F1) exercée par l'intermédiaire du dispositif d'ajustement (5) est opposée à la direction d'action de la force exercée sur le corps de fermeture (4) par la matière fondue plastifiée qui s'écoule dans le canal (6) à matière fondue situé côté corps de base lorsque le clapet anti-retour (1) est en position montée dans une machine de moulage par injection.

3. Clapet anti-retour selon les revendications 1 ou 2, **caractérisé en ce que** la force d'ajustement (F1) exercée par l'intermédiaire du dispositif d'ajustement (5) est sélectionnée de manière à être plus petite qu'une force (F2) appliquée sur le corps de fermeture (4) par la matière fondue plastifiée qui s'écoule dans le canal (6) à matière fondue situé côté corps de base lors d'une opération de moulage par injection d'une machine de moulage par injection dans laquelle le clapet anti-retour (1) est monté.

4. Clapet anti-retour selon l'une des revendications précédentes, **caractérisé en ce qu'**au moins à son extrémité non tournée vers le corps de fermeture (4), certaines parties du goujon (10) pénètrent dans un alésage ménagé dans le corps de base et en particulier dans un alésage aveugle ou une perforation (7).

5. Clapet anti-retour selon l'une des revendications précédentes, **caractérisé en ce que** la première butée complémentaire située côté corps de base est formée par l'extrémité libre, pénétrant dans le corps de base (3), d'un goujon (9) de butée complémentaire relié au corps de base (3).

6. Clapet anti-retour selon la revendication 4, **caractérisé en ce que** la deuxième butée complémentaire située côté corps de base est formée par un épaulement radial (8) ménagé dans l'alésage.

7. Machine de moulage par injection, en particulier pour le moulage par injection de matière synthétique thermoplastique, présentant au moins un clapet anti-retour (1) selon l'une des revendications précédentes.

8. Machine de moulage par injection selon la revendication 7, **caractérisée en ce que** la force d'ajustement (F1) exercée sur le dispositif d'ajustement (5) est sélectionnée de manière à être plus petite qu'une force appliquée sur le corps de fermeture (4) par la matière fondue plastifiée qui s'écoule dans le canal (6) à matière fondue situé côté corps de base lors d'une opération de moulage par injection d'une machine de moulage par injection.
